# EUROPEAN PATENT SPECIFICATION

(11) **EP 0 584 927 B1**
(45) Date of publication and mention of the grant of the patent: **13.05.1998**
(21) Application number: 93305631.9
(22) Date of filing: 19.07.1993
(51) Int. Cl.: C08L 23/04, C08L 51/06, C08F 255/02, C08L 23/16

(54) **Thermoplastic compositions and processes for cross-linking**
Thermoplastische Zusammensetzungen und Verfahren zum Vernetzen
Compositions thermoplastiques et procédés pour réticuler

(30) Priority: 24.07.1992 GB 9215821
(43) Date of publication of application: 02.03.1994
(73) Proprietor: EXXON CHEMICAL PATENTS INC., Florham Park New Jersey 07932 (US)
(72) Inventor: Wong, Wai Keung, B-3080 Tervuren (BE); Varrall, David Cyril, B-3080 Tervuren (BE)
(74) Representative: Dew, Melvyn John

(56) References cited:
- EP-A- 0 426 073
- EP-A- 0 507 075
- WO-A-91/08262

## Description

### Field of invention

The invention relates to thermoplastic compositions and processes for cross-linking them for use especially in cable coating end-uses.

### Background of invention

Different methods have been proposed for grafting a silane onto a backbone of an ethylenic polymer so that the resultant composition can be cross-linked by exposure to moisture.

The grafting is performed by introducing a free-radical generating compound such as a peroxide.

Processability of the composition depends on the polymers present in the composition. The presence of lower molecular weight materials can aid extrusion speeds (see WO 9108262).

Other disclosures of compositions of ethylenic or olefinic polymers include GB 2098999; GB 2181437; FR 2315513 (US 4618654 corresponds); BE 9065048 and FR 2374344 (US 4228255 corresponds). GB 125-581; GB 1037687; GB 1031869; GB 1002453 and EP 57238-A1.

EP-0A-0 507 075 discloses compositions containing mixtures of propylene polymers and ethylene polymers and an organosilicon compound. The ethylene polymer component may be a mixture of ethylene copolymers of different melt flow indices but compositions in which the ethylene polymer components are the major part of the composition are not disclosed.

The moisture induced cross-linking is promoted generally by a silanol condensation catalyst present in the blend. The cross-linking is generally a separate, time-consuming step.

It is the object of the invention to provide a polymer composition which responds rapidly to a cross-linking process.

### Summary of the invention

The invention provides a thermoplastic composition including:
a) a main polymer component derived from ethylene and optionally at least one higher alpha-olefin having Ml of from 0.5 to 15, preferably from 0.8 to 10;
b) from 1 to 45% by weight of a) + b) of an auxiliary polymer component which is cocrystallisable with a), derived of ethylene and at least one olefinically unsaturated comonomer, said component b) having an Ml which is at least 0.3 units below that of a) (the Ml values being measured according to ASTM-1238, condition E; 2.16 kg : 190°C, and
c) moisture cross-linking additives including a silane; a silanol condensation catalyst and a free radical initiator, wherein components a) and b) together comprise from 65% to 98% by weight of the composition.

Preferably component b) has an Ml of from 0.5 to 12 units below that of a), especially from 1 to 10 units.

Relatively small amounts of a lower melt index, i.e. higher molecular weight component, speed up the response of the blend in the silane cross-linking process. Thus, the moisture curing step subsequent to extrusion of an electrical cable can be shortened. Processability can be preserved as relatively small amounts only are used.

The lower the Ml of the auxiliary component the smaller the amount needed for achieving faster moisture curing. Typically the Ml range is from 0.5 upwards for the auxiliary component.

The selection of the main and the auxiliary component is fairly wide but care should be taken to ensure that they are mutually compatible to an extent sufficient for their co-crystallinisation. Co-crystallisation can be observed by absence of phase separation in microscopic observation or a significant change in melting behaviour of the blend as compared to the individual components. The requirement of co-crystallibility may also provide preferred ranges for blending the main and auxiliary component. Thus for different combination of main and auxiliary components, different MI and blending ranges may be optimal.

It may be possible, if the main polymer component has an MI of 15, for the auxiliary component to have an MI of 1 if the components have good compatibility.

If the MI difference is too high for certain combinations of components, conventional blending may become difficult but higher MI differences could be achieved by producing the components in a single polymerisation process e.g. by series reactors, i.e. without a physical blending process. The component b) may have an MI of 4.5 below that of a).

It is believed that the high molecular weight fraction helps to make the effect of the cross-linking of a low molecular weight component apparent and detectable.

The main component may be an ethylene homopolymer (LDPE) or a copolymer. Preferred polymers are LLDPE, LDPE and VLDPE. Table A below characterises distinguishing features of these polymers.

**TABLE A**

| **POLYMER** | **DENSITY** | **COMONOMERS** | **Mw/Mn** |
|---|---|---|---|
| HDPE | > 0.94 | | |
| LDPE | 0.91 | 1-butene | < 5 |
| | 0.94 | 1-hexene | preferably |
| | preferably | 4-methyl-1-pentene | < 3 |
| | 0.915 to 0.925 | 1-octene | 3.5 |
| VLDPE | 0.89-0.91 | 1-butene | |
| | | 1-hexene | < 5 |
| | | 1-octene | |
| LDPE | 0.91 to 0.93 | | < 5 |

The auxiliary component may be selected from amongst the same polymers as in Table A but with appropriate different melt indices.

In all these cases the melt index of the auxiliary component is preferably 30 % especially 80 % below that of the main component. Thus if the main component has a melt index of 4, the auxiliary component may have a melt index of less than 0.8 (80 % of 4 = 3.2; 4 - 3.2 = 0.8).

Preferably, the composition may further include a polymeric processing aid in the form of a fluorinated polymer and/or a polymer derived from ethylene and optionally at least one olefinically unsaturated comonomer having a MI which is at least 5 MI above that of (a) to aid extrusion.

The compositions may be produced by blending, optionally together with other components of the silane cross-linking package. The composition of the invention may also be produced as a reactor blend for example in a series reactor arrangement for polymerisation.

In the blends of the present invention, silane groups capable of crosslinking are introduced and provided on the polymer. Silane groups capable of crosslinking include any alkoxy silane- or chlorosilane- containing group which is capable of forming an -SiOH group on hydrolysis. The silane groups are preferably vinyl silane groups. They may be introduced into the polyolefin by grafting a silane, e.g., a vinyl silane, preferably a vinyl trialkoxy silane such as vinyl trimethoxy silane, onto the polyolefin backbone using known methods, for example employing a peroxide initiator.

The polymers may be blended together using known techniques e.g., by melt mixing or extrusion blending. If the blending is carried out before or during silane grafting, then more than one of the polymer components will possess crosslinkable silane groups. Alternatively, the polymers may be separately silane grafted and then blended; or only the main component (a) may possess grafted silane groups such that it is the only polymer in the blend which is crosslinkable.

Preferably, the blend has a silane group content of 0.5 to 1.5 wt % based on the total weight of the blend of components (a) and (b).

The silane group-containing blend of the present invention may be cured using moisture, typically water at 60 to 90°C, preferably about 80°C, in the presence of a catalyst such as a dibutyl tin dilaurate. Industrially, such curing may be performed for example in a hot sauna or a steam environment; alternatively the blend may simply be left for an extended period of time in moist air.

The blends of the present invention may contain additives which are typically used in coating compositions for cables e.g., fillers such as aluminium trihydrate, calcium carbonate, carbon black; colourants; and other additives such as anti-oxidants. They are generally incorporated at the polymer blending stage.

The blends may be extruded using known methods e.g., a single screw extruder to produce a crosslinkable coating in the necessary dimensions. The extruded coating is then exposed to moisture to crosslink it. Accordingly, the present invention provides a polymeric composition comprising a blend as described above which is crosslinked through the silane groups; and a process for producing such a composition comprising performing a crosslinking reaction by hydrolysing and condensing the silane groups of the above described blends.

The present invention also provides a shaped coating formed from such a composition; a cable when coated with such a composition; and the use of the above-described blends in cable coating applications.

Table B sets out typical overall contents of all blends components.

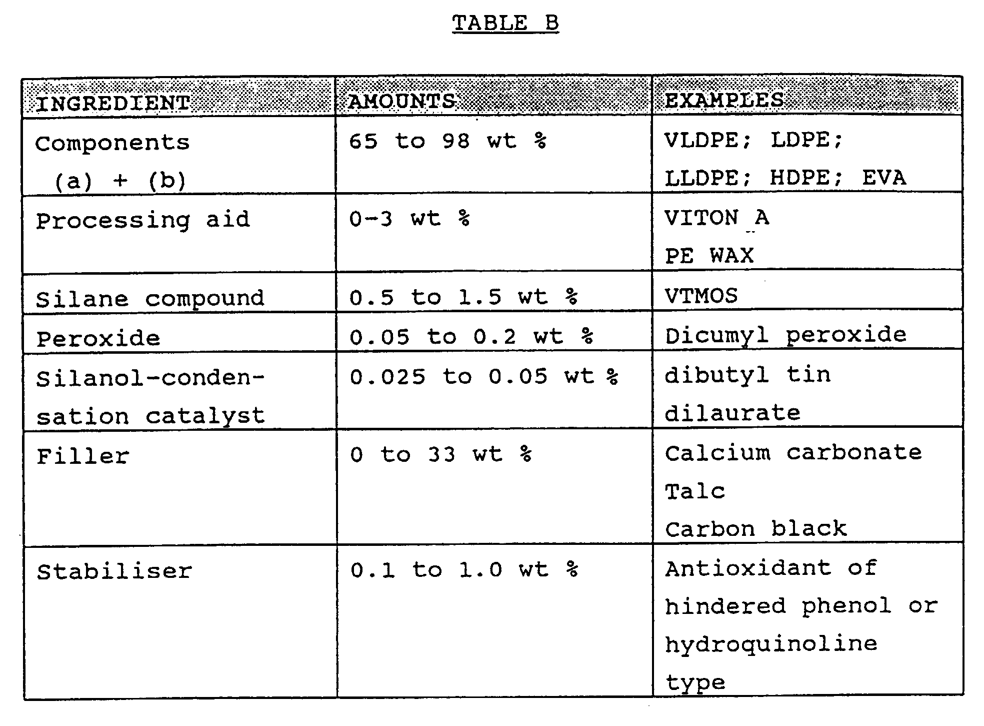

The invention is illustrated by the Examples.

### Examples 1-5

The resins listed in Table A were blended as shown in the later Tables 1 to 5

**TABLE A**

| **LIST OF POLYETHYLENE USED** | | | | |
|---|---|---|---|---|
| **RESIN** | **MI** | **DENSITY** | **MWD** | **COMONOMER** |
| VLDPE 1 | 9.3 | 0.8815 | 1.98 | 1-BUTENE |
| VLDPE 2 | 1.25 | 0.8857 | 1.88 | 1-BUTENE |
| VLDPE 3 | 7.3 | 0.883 | 1.93 | 1-BUTENE |
| VLDPE 4 | 1.1 | 0.9 | 2 | 1-BUTENE |
| VLDPE 5 | 5.8 | 0.882 | 2 | 1-BUTENE |
| VLDPE 6 | 1.4 | 0.883 | 1.86 | 1-BUTENE |
| LLDPE 1 | 9 | 0.895 | 2 | 1-BUTENE |
| LLDPE 2 | 0.8 | 0.886 | 2.06 | 1-BUTENE |
| LLDPE 3 | 2.8 | 0.918 | 3.5 | 1-BUTENE |
| LLDPE 4 | 0.5 | 0.918 | - | 1-BUTENE |

The samples were pre-dried at 70°C for 12 hours. The samples were tumble blended with 0.1 wt % of dicumyl peroxide, 1.2 wt % vinyl trimethoxy silane (VTMOS) and 0.05 wt % dibutyl tin dilaurate catalyst for a few minutes and left to soak for 12 hours. The resulting blends extruded and grafted using a Haake single screw extruder (25 L/D), L/D being the length/diameter ratio, a channel depth ratio of 3:1 giving a high compression using a 19 mm wide slit die for a flat strip having a thickness of 1 mm. The temperature profile was 160-180-200-185°C and the screw was turned at 40 rpm. The extruded tapes were put in a vacuum at a constant temperature then moisture crosslinked in water at 80°C for different periods of time. After the moisture curing, the specimen is immediately subjected to a hot-set test to measure the % elongation of the sample by subjecting it to a load of 2.0 kg/cm² for 15 minutes within an oven set at 200°C. The % elongation is measured where possible. It is inversely proportional to the state of the crosslink network (i.e. high % elongation indicate poor crosslink network formation and vice versa). The results of the experiments are shown below. Rapid crosslinking response is demonstrated by a small percentage of elongation. Generally speaking percentage elongation is also inversely proportional to crosslink density. In all cases two measurements are made. Also given is the torque on the screw to maintain 40 rpm and the melt pressure detected in the extruder. Both indicate processability.

The MI in Table 1 was determined by ASTM-1238 condition E : 2.16 kg; 190°C.

| **Example 1/Table 1** | | | | |
|---|---|---|---|---|
| **Crosslinking period (min)** | **VLDPE 1 2 measurements** | **VLDPE1/VLDPE2 (85/15)** | **VLDPE1/VLDPE2 (70/30)** | **VLDPE2** |
| 45 | 180%,180% | 135%, 145% | 120%, 130% | 5 min. 85%/80% |
| 60 | 145%, 160% | 105%, 115% | 110%, 105% | 10 min 70%/60% |
| 90 | 125%, 130% | 95%, 95% | 90%, 85% | 30 min 30%/45% |
| 120 | 90%, 90% | 80%, 80% | 75%, 70% | |
| Torque (NM) | 18.4 | 21.4 | 26.5 | 51.2 |
| Melt pressure (bar) | 26 | 34 | 44 | 106 |

| **Example 2/Table 2** | | |
|---|---|---|
| **Curing period (min)** | **VLDPE3** | **VLDPE3/VLDPE4 (85/15)** |
| 60 | 225% | 80%, 80% |
| 120 | 110%, 115% | 60%, 55% |
| 180 | 80%, 75% | 35%, 40% |
| Torque (NM) | 23.1 | 26.7 |
| Melt pressure (bar) | 33 | 43 |

| **EXAMPLE 3/TABLE 3** | | | | |
|---|---|---|---|---|
| **Curing period (min)** | **VLDPE5** | **VLDPE5/VLDPE6 (85/15)** | **VLDPE5/VLDPE6 (70/30)** | **VLDPE6** |
| 15 | - | - | - | 150%, 145% |
| 30 | - | - | - | 90%, 90% |
| 60 * | 780", 856" | 165%, 170% | 120%, 125% | 60%, 55% |
| 90 | 150%, 135% | 115%, 105% | 85%, 100% | 45%, 40% |
| 120 | 105%, 105% | 80%, 90% | 60%, 65% | - |
| 150 | 70%, 75% | 55%, 60% | 50%, 50% | - |
| Torque (NM) | 23.5 | 26.5 | 28.7 | 46.5 |
| Melt pressure (bar) | 32 | 37 | 42 | 82 |
| * Where the sample does not elongate properly but breaks, the value marked " is the time in seconds before it breaks. | | | | |

| **EXAMPLE 4/TABLE 4** | | |
|---|---|---|
| **Curing period (min)** | **LLDPE 1** | **LLDPE1/LLDPE2 (70/30)** |
| 30 | 210%, 200% | 110%, 120% |
| 45 | 155%, 150% | 80%, 115% |
| 60 | 135%, 140% | 75%, 95% |
| 120 | 90%, 85% | 40%, 40% |
| Torque (NM) | 21.5 | 30.5 |
| Melt pressure (bar) | 32 | 60 |

| **EXAMPLE 5/TABLE 5** | | | | |
|---|---|---|---|---|
| **Curing period (min)** | **LLDPE 3** | **LLDPE3/LLDPE4 (95/5)** | **LLDPE3/LLDPE4 (80/20)** | **LLDPE4** |
| 5 | 130%, 115% | 95%, 90% | 75%, 95% | 30%, 25% |
| 10 | 60%, 65% | 45%, 45% | 50%, 50% | - |
| 15 | 40%, 40% | 30%, 30% | 25%, 35% | - |
| 30 | 30%, 35% | 20%, 30% | 20%, 30% | 20%, 15% |
| Torque (NM) | 28.4 | 29.1 | 31.7 | 53.1 |
| Melt pressure (bar) | 69 | 74 | 80 | 188 |

Once again the above data indicate that the addition of small amount of lower MI VLDPE to that of the higher MI ones reduce the curing time required to obtain low hot-set elongation % and the addition of higher molecular weight species does not make processing much more difficult as indicated by the torque and melt pressure measurements. The addition of a small amount (e.g. 5 wt %) of a PE wax reduces torque and melt pressure further without unduly extending the curing period.

## Claims

1. Thermoplastic composition including a
(a) a main polymer component derived from ethylene and optionally at least one higher alpha-olefin having Ml of from 0.5 to 15, preferably from 0.8 to 10;
(b) from 1 to 45 % by weight of (a) + (b) of an auxiliary polymer component which is cocrystallisable with (a) derived of ethylene and at least one olefinically unsaturated comonomer, said component (b) having an Ml which is at least 0.3 units below that of (a) (the Ml values being measured according to ASTM-1238, condition E; 2.16 kg:190°C).
and (c) moisture induced cross-linking additives including a silane, a silanol condensation catalyst and a free radical initiator, wherein components (a) and (b) together comprise from 65 % to 98 % by weight of the composition.

2. Composition according to claim 1 including further (d) a polymeric processing aid in the form of a fluorinated polymer and/or a polymer derived from ethylene and optionally at least one olefinically unsaturated comonomer having an Ml which is at least 5 Ml units above that of (a).

3. Composition according to claim 1 or 2 in which (a) is an LLDPE and (b) is an LLDPE, VLDPE or LDPE having an Ml at least 30 %, preferably at least 80 % below that of (a); (b) being preferably present in amounts of from 5 to 45 % especially 10 to 30 wt %.

4. Composition according to claim 1 or claim 2 in which (a) is an LDPE and (b) is an LLDPE, VLDPE or LDPE having an MI at least 30 %, preferably at least 80 % below that of (a), (b) being present in amounts of from 5 to 45 wt % especially 10 to 30 wt %.

5. Composition according to claim 1 or 2 in which (a) is a VLDPE and (b) is an LLDPE, VLDPE or LDPE having an MI at least 30 %, preferably at least 80 % below that of (a), (b) being present in amounts of from 5 to 45 wt %, especially 10 to 30 wt %.

6. Composition according to any of the preceding claims in which there is present from 5 to 70 wt % by weight of (a) + (b) of a filler.

7. Process for making a moisture cross-linkable product including
(1) selecting a composition according to any of the preceding claims containing a silane and a silanol condensation catalyst and a free radical initiator;
(2) grafting the silane onto the polymer components;
(3) shaping the product in molten form;
(4) exposing the product to moisture to cross-link the polymers.

8. Process according to claim 7 in which the silane has been introduced in liquid form in an extruder or wherein the silane has been retained on a polymer and blended in solid form into the composition.

## Patentansprüche

1. Thermoplastische zusammmsetzung, die
(a) eine Hauptpolymerkomponente, die von Ethylen und gegebenenfalls mindestens einem höheren α-Olefin abgeleitet ist und einen Schmelzindex (MI) von 0,5 bis 15, vorzugsweise 0,8 bis 10, aufweist;
(b) 1 bis 45 Gew.%, bezogen auf das Gewicht von (a) + (b), einer Hilfspolymerkomponente, die mit (a) cokristallisierbar ist und von Ethylen und mindestens einem olefinisch ungesättigten Comonomer abgeleitet ist, wobei die Komponente (b) einen MI aufweist, der mindestens 0,3 Einheiten unter dem von (a) liegt (wobei die MI-Werte gemäß ASTM-1238, Bedingung E, 2,16 kg, 190°C gemessen werden), und
(c) durch Feuchtigkeit aktivierte Vernetzungsadditive einschließt, die ein Silan, einen Silanolkondensationskatalysator und einen freiradikalischen Initiator einschließen, wobei die Komponenten (a) und (b) zusammen 65 % bis 98 %, bezogen auf das Gewicht der Zusammensetzung, umfassen.

2. Zusammensetzung nach Anspruch 1, die außerdem (d) ein polymeres Verarbeitungshilfsmittel in Form eines fluorinierten Polymers und/oder eines Polymers einschließt, das von Ethylen und wahlweise mindestens einem olefinisch ungesättigten Comonomer abgeleitet ist, das einen MI aufweist, der mindestens 5 MI-Einheiten über dem von (a) liegt.

3. Zusammensetzung nach Anspruch 1 oder 2, in der (a) ein LLDPE ist und (b) ein LLDPE, VLDPE oder LDPE mit einem MI von mindestens 30 %, vorzugsweise mindestens 80 % unter dem von (a) ist, wobei (b) vorzugsweise in Mengen von 5 bis 45 %, insbesondere 10 bis 30 Gew.% vorhanden ist.

4. Zusammensetzung nach Anspruch 1 oder Anspruch 2, in der (a) ein LDPE ist und (b) ein LLDPE, VLDPE oder LDPE mit einem MI von mindestens 30 %, vorzugsweise mindestens 80 % unter dem von (a) ist, wobei (b) in Mengen von 5 bis 45 Gew.%, insbesondere 10 bis 30 Gew.%, vorhanden ist.

5. Zusammensetzung nach Anspruch 1 oder 2, in der (a) ein VLDPE ist und (b) ein LLDPE, VLDPE oder LDPE mit einem MI von mindestens 30 %, vorzugsweise mindestens 80 % unter dem von (a) ist, wobei (b) in Mengen von 5 bis 45 Gew.%, insbesondere 10 bis 30 Gew.%, vorhanden ist.

6. Zusammensetzung nach einem der vorhergehenden Ansprüche, in der 5 bis 70 Gew.% eines Füllstoffs vorhanden ist, bezogen auf das Gewicht von (a) + (b).

7. Verfahren zur Herstellung eines durch Feuchtigkeit vernetzbaren Produkts, bei dem
(1) eine Zusammensetzung nach einem der vorhergehenden Ansprüche ausgewählt wird, die ein Silan und einen Silanolkondensationskatalysator und einen freiradikalischen Initiator enthält,
(2) das Silan auf die Polymerkomponenten gepfropft wird,
(3) das Produkt in geschmolzener Form geformt (einer Formgebung unterworfen) wird,
(4) das Produkt Feuchtigkeit ausgesetzt wird, um die Polymere zu vernetzen.

8. Verfahren nach Anspruch 7, bei dem das Silan in flüssiger Form in einen Extruder eingebracht worden ist oder bei dem das Silan auf einem Polymer festgehalten und in fester Form in die Zusammensetzung eingemischt wurde.

## Revendications

1. Composition thermoplastique comprenant
(a) un constituant polymérique principal dérivé de l'éthylène et, facultativement, d'au moins une alpha-oléfine supérieure ayant un IF de 0,5 à 15, de préférence de 0,8 à 10 ;
(b) 1 à 45 %, en poids des constituants (a) + (b) d'un constituant polymérique auxiliaire qui est cocristallisable avec le constituant (a), dérivé de l'éthylène et d'au moins un comonomère à insaturation oléfinique, ledit constituant (b) ayant un IF qui est inférieur d'au moins 0,3 unité à celui du constituant (a) (les valeurs de IF étant mesurées conformément à la norme ASTM-1238, condition E ; 2,16 kg ; 190°C) ; et
(c) des additifs de réticulation induite par l'humidité, comprenant un silane, un catalyseur de condensation du type silanol et un initiateur radicalaire, dans laquelle les constituants (a) et (b), conjointement, représentent 65% à 98 % en poids de la composition.

2. Composition suivant la revendication 1, comprenant en outre (d) un adjuvant polymérique de traitement sous forme d'un polymère fluoré et/ou d'un polymère dérivé de l'éthylène et, facultativement, d'au moins un comonomère à insaturation oléfinique ayant un IP qui est supérieur d'au moins 5 unités de IF à celui du constituant (a).

3. Composition suivant la revendication 1 ou 2, dans laquelle le constituant (a) est un PELBD et le constituant (b) est un PELBD, un PETBD ou un PEBD ayant un IF inférieur d'au moins 30 %, de préférence d'au moins 80 %, à celui du constituant (a) ; le constituant (b) étant de préférence présent en des quantités de 5 à 45 %, notamment de 10 à 30 % en poids.

4. Composition suivant la revendication 1 ou la revendication 2, dans laquelle le constituant (a) est un PEBD et le constituant (b) est un PELBD, un PETBD ou un PEBD ayant un IF inférieur d'au moins 30 %, de préférence d'au moins 80 %, à celui du constituant (a), le constituant (b) étant présent en une quantité de 5 à 45 % en poids, notamment de 10 à 30 % en poids.

5. Composition suivant la revendication 1 ou 2, dans laquelle le constituant (a) est un PETBD et le constituant (b) est un PELBD, un PETBD ou un PEBD ayant un IF inférieur d'au moins 30 %, de préférence d'au moins 80 %, à celui du constituant (a), le constituant (b) étant présent en des quantités de 5 à 45 % en poids, notamment de 10 à 30 % en poids.

6. Composition suivant l'une quelconque des revendications précédentes, dans laquelle sont présents 5 à 70 % en poids, sur la base du poids des constituants (a) et (b), d'une charge.

7. Procédé pour la préparation d'un produit réticulable par l'humidité, comprenant les étapes consistant
(1) à choisir une composition suivant l'une quelconque des revendications précédentes, contenant un silane et un catalyseur de condensation du type silanol ainsi qu'un initiateur radicalaire ;
(2) à greffer le silane sur les constituants polymériques ;
(3) à façonner le produit sous forme fondue ;
(4) à exposer le produit à l'humidité pour provoquer la réticulation des polymères.

8. Procédé suivant la revendication 7, dans lequel le silane a été introduit sous forme liquide dans une extrudeuse ou dans lequel le silane a été retenu sur un polymère et mélangé sous forme solide à la composition.
